# EUROPEAN PATENT SPECIFICATION

(11) **EP 4 092 388 B1**
(45) Date of publication and mention of the grant of the patent: **23.10.2024**
(21) Application number: 22196070.1
(22) Date of filing: 16.09.2022
(51) Int. Cl.: G01C 21/36, G06F 16/9537

(54) **METHOD AND APPARATUS OF RECOMMENDING INFORMATION, STORAGE MEDIUM, AND PROGRAM PRODUCT**
VERFAHREN UND VORRICHTUNG ZUM EMPFEHLEN VON INFORMATIONEN, SPEICHERMEDIUM UND PROGRAMMPRODUKT
PROCEDE ET DISPOSITIF DE RECOMMANDATION D'INFORMATIONS, SUPPORT DE STOCKAGE ET PRODUIT PROGRAMME

(30) Priority: 17.09.2021 CN 202111096068
(43) Date of publication of application: 23.11.2022
(73) Proprietor: Beijing Baidu Netcom Science Technology Co., Ltd., Beijing 100085 (CN)
(72) Inventor: Han, Yajuan, Beijing, 100085 (CN); Chen, Xiantao, Beijing, 100085 (CN)
(74) Representative: Hoffmann Eitle

(56) References cited:
- WO-A1-2015/022555
- US-A1- 2016 047 672

## Description

### TECHNICAL FIELD

The present disclosure relates to a field of a computer technology, in particular to fields of big data, intelligent recommendation, cloud services, etc., and more specifically, to a method and an apparatus of recommending an information, a storage medium, and a program product.

### BACKGROUND

Point of Interest (POI) refers to an entity in real-world that may be abstracted as a spatial point, such as a restaurant, a hotel, a station, a parking lot, etc. Data of POI has spatial coordinates and various attributes, and is one of basic data of various map query software. With the data of POI on an Application Programming Interface (API) provided by a map, related services may be provided to users.
US 2016/047672 A1 discloses a navigation application configured to output a navigation map corresponding to directions to a selected point of interest (POI). The navigation application can also be configured to detect that a location of an end-user device is within a predetermined parking proximity of the selected POI. The navigation application can further be configured to provide a request to a navigation server for parking options associated with the selected POI.
WO 2015/022555 A1 discloses a method for monitoring and navigating a vehicle with electric drive towards a target with an off-line navigation device, in which a table is prepared and stored with data related to the vehicle when moving with a predetermined speed and under a predetermined load; storing in the memory the consumption of the vehicle when it takes a unity distance along a horizontal road with the predetermined speed; then storing corrected consumption values as a function of positive or negative angles of inclination of a road section of unity length that represents the ratio of experimentally determined consumption values of the vehicle at any given angle of inclination to the consumption along the horizontal road of unity length; storing map data also including the altitude and/or steepness information; then after the start of the vehicle monitoring in given time intervals the momentary storage capacity of the battery of the vehicle; dividing the remaining route leading to the target into a plurality of road sections so that each road section has a respective uniform angle of inclination, and in case of each of said sections and based on the stored data the respective weighted costs associated with the section is calculated; the weighted costs are summarized to the remaining length of the route whereby the expected consumption of the vehicle till reaching the target is determined, and comparing the expected consumption with the measured available capacity of the battery, and if the expected consumption is higher than the available capacity of the battery, warning the driver of the vehicle.

### SUMMARY

The invention is set out by the appended set of claims.

The present disclosure provides a method and an apparatus of recommending an information, a storage medium, and a program product

According to an aspect of the present disclosure, a method of recommending an information according to claim 1 is provided.

According to another aspect of the present disclosure, an apparatus of recommending an information according to claim 4 is provided.

According to another aspect of the present disclosure, a non-transitory computer-readable storage medium having computer instructions therein is provided, and the computer instructions are configured to cause a computer to implement the method of recommending the information as described above.

According to another aspect of the present disclosure, a computer program product containing a computer program is provided, and the computer program, when executed by a processor, causes the processor to implement the method of recommending the information as described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 schematically shows an exemplary system architecture to which a method and an apparatus of recommending an information may be applied according to embodiments of the present disclosure;
FIG. 2 schematically shows a flowchart of a method of recommending an information according to embodiments of the present disclosure;
FIG. 3A schematically shows a schematic diagram of a method of recommending an information for a pre-travel state according to embodiments of the present disclosure;
FIG. 3B schematically shows a schematic diagram of a method of recommending an information for an in-travel state according to embodiments of the present disclosure;
FIG. 3C schematically shows a schematic diagram of a method of recommending an information for a travel-end state according to embodiments of the present disclosure;
FIG. 4 schematically shows a block diagram of an apparatus of recommending an information according to embodiments of the present disclosure; and
FIG. 5 shows a schematic block diagram of an exemplary electronic device not falling within the scope of the invention for implementing embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope of the present disclosure. Likewise, for clarity and conciseness, descriptions of well-known functions and structures are omitted in the following description.

In the technical solution of the present disclosure, the collection, storage, use, processing, transmission, provision, disclosure and application of user's personal information and location involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

In a process of using a map to travel, a route information and a POI information that a user pays attention to change gradually from a pre-travel stage, an in-travel stage, to a travel-end stage. However, a presentation of the route information and the POI information on the map and a recommendation strategy are relatively static, and it is rare to dynamically recommend an information based on a temporal location in travel. During a travel process of a user with a navigation enabled, the presentation of the route information and the POI information and the recommendation strategy are substantially based on the route information, the POI information is rarely included in a travel recommendation, and the POI information is not dynamically recommended and presented according to the temporal location in travel. In addition, most of recommendations for travel information may be ended after the navigation is ended. However, in real life, after the navigation is ended and a POI at a final destination is reached, it is exactly a beginning of the need for information of a local life service, and the map may still provide many information required by the user, such as a strategy and a recommendation for traveling around the destination, a discount information, and/or other information.

Embodiments of the present disclosure provide a method or a strategy of dynamically recommending a route information and a POI information based on a temporal location in travel in different travel modes (including but not limited to driving, taxi, cycling, bus or subway, walking, etc.). By making full use of advantages of the map in data and recognition of user's dynamic travel, the information required by the user may be provided pertinently at different travel stages, so as to provide information acquired by the user more efficiently.

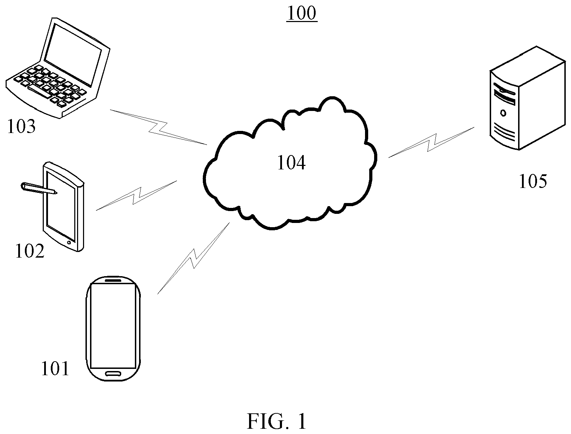

FIG. 1 schematically shows an exemplary system architecture to which a method and an apparatus of recommending an information may be applied according to embodiments of the present disclosure.

It should be noted that FIG. 1 is only an example of a system architecture to which embodiments of the present disclosure may be applied to help those skilled in the art understand the technical content of the present disclosure, but it does not mean that embodiments of the present disclosure may not be applied to other devices, systems, environments or scenarios. For example, in other embodiments, an exemplary system architecture to which the method and the apparatus of recommending the information may be applied may include a terminal device, but the terminal device may implement the method and the apparatus of recommending the information provided in embodiments of the present disclosure without interacting with a server.

As shown in FIG. 1, a system architecture 100 according to such embodiments may include terminal devices 101, 102, 103, a network 104, and a server 105. The network 104 is a medium used to provide a communication link between the terminal devices 101, 102, 103 and the server 105. The network 104 may include various connection types, such as wired or wireless communication links, etc.

The terminal devices 101, 102, 103 used by a user may interact with the server 105 via the network 104, so as to receive or send messages, etc. Various communication client applications may be installed on the terminal devices 101, 102, 103, such as knowledge reading applications, web browser applications, search applications, instant messaging tools, mailbox clients and/or social platform software, etc. (for example only).

The terminal devices 101, 102, 103 may be various electronic devices having display screens and supporting web browsing, including but not limited to smartphones, tablet computers, laptop computers, desktop computers, etc.

The server 105 may be a server that provides various services, such as a background management server (for example only) that provides a support for a content browsed by the user using the terminal devices 101, 102, 103. The background management server may analyze and process a received user request and other data, and feed back a processing result (e.g., web page, information or data acquired or generated according to the user request) to the terminal devices. The server may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system, or a server combined with a block-chain.

It should be noted that the method of recommending the information provided by embodiments of the present disclosure may generally be performed by the terminal device 101, 102 or 103. Accordingly, the apparatus of recommending the information provided by embodiments of the present disclosure may be provided in the terminal device 101, 102 or 103.

Alternatively, the method of recommending the information provided by embodiments of the present disclosure may generally be performed by the server 105. Accordingly, the apparatus of recommending the information provided by embodiments of the present disclosure may also be provided in the server 105. The method of recommending the information provided by embodiments of the present disclosure may also be performed by a server or server cluster different from the server 105 and capable of communicating with the terminal devices 101, 102, 103 and/or the server 105. Accordingly, the apparatus of recommending the information provided by embodiments of the present disclosure may also be provided in a server or server cluster different from the server 105 and capable of communicating with the terminal devices 101, 102, 103 and/or the server 105.

For example, when it is required to output a travel stage recommendation information, the terminal devices 101, 102, 103 may determine a travel destination, a travel mode, and a current travel state. Then, the determined travel destination, travel mode and current travel state may be transmitted to the server 105. The server 105 may determine a first related information related to the travel destination; determine a second related information related to the travel mode in response to the travel mode selected for going to the travel destination; determine, from the first related information and the second related information, a target related information matched with the current travel state according to the current travel state related to going to the travel destination in the travel mode; obtain a travel stage recommendation information corresponding to the current travel state according to the target related information; and output the travel stage recommendation information. Alternatively, a server or server cluster capable of communicating with the terminal devices 101, 102, 103 and/or the server 105 may analyze the travel destination, the travel mode and the current travel state, and output the travel stage recommendation information.

It should be understood that the number of terminal devices, network and server shown in FIG. 1 is only schematic. According to implementation needs, any number of terminal device, network and server may be provided.

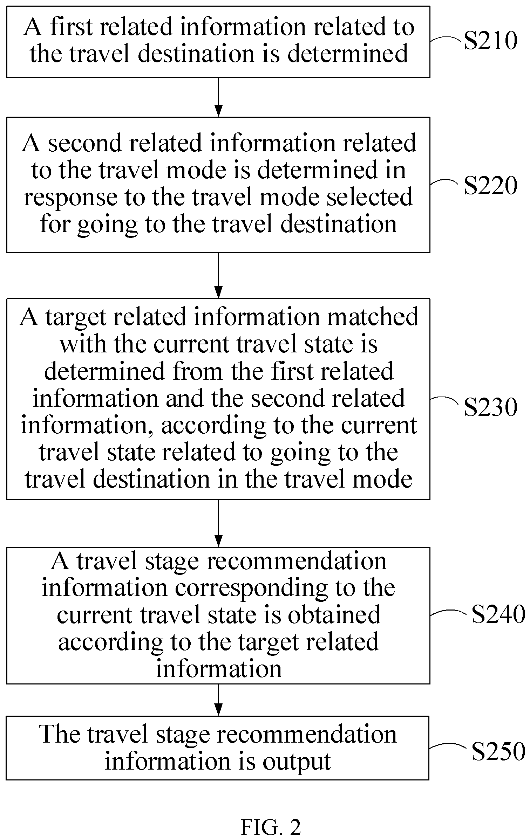

FIG. 2 schematically shows a flowchart of a method of recommending an information according to the present disclosure.

As shown in FIG. 2, the method includes operations S210 to S250.

In operation S210, a first related information related to a travel destination is determined.

In operation S220, a second related information related to a travel mode is determined in response to the travel mode selected for going to the travel destination.

In operation S230, a target related information matched with a current travel state is determined from the first related information and the second related information, according to the current travel state related to going to the travel destination in the travel mode.

In operation S240, a travel stage recommendation information corresponding to the current travel state is obtained according to the target related information.

In operation S250, the travel stage recommendation information is output.

According to embodiments of the present disclosure, the travel destination may be a destination input or selected by the user in map software. The first related information may include a POI related information of the travel destination. The POI related information may include, for example, at least one selected from: a POI business state information, an introduction information, a picture information, a photo album information, a list information, a comment information, an opening hours information, a touring route information, a reservation information, a consumption order information, a ticket verification information, a building entrance information, a location information, a guide map information, a real view information, a parking lot information, an entrance information of a parking lot, a remaining parking place information of a parking lot, a bus or subway hub exit information, a recommended parking spot information, a walking route information for reaching the destination, a foot traffic information, a queuing information, an online-queuing function information, a strategy information for a business circle where a destination is located, a recommendation information for surrounding stores, a discount information, a new product information, a popular goods information, a recommended dishes information, an online meal-ordering function information, and/or other information.

According to embodiments of the present disclosure, the travel mode may include at least one selected from: self-driving travel, public transportation travel, cycling, walking, taxi travel and/or other modes. The public transportation may include at least one selected from: bus, subway, train, plane, etc.

For example, when the travel mode is self-driving travel, the second related information may include at least one selected from: a real-time traffic information, a route plan information, a remaining-distance information, a remaining-time-consumption information, an estimated-arrival-time instant information, a route information, a reminder information, etc. The real-time traffic information may include at least one selected from: a real-time road condition information, a congestion information, a real-time bus or subway information, etc. The route plan information may include, for example, at least one selected from: an estimated-time-consumption information, a cost information, a walking distance information, etc. The route information may include, for example, at least one selected from: a turning information, a highway exit information, etc. The reminder information may include, for example, a reminder of a peccancy monitoring information such as a speed measurement information.

For example, when the travel mode is public transportation travel, the second related information may include at least one selected from: a route plan information, a station information, a reminder information, a real-time traffic information, a remaining-distance information, a remaining-time-consumption information, an estimated-arrival-time instant information, etc. The station information may include, for example, at least one selected from a transfer station information, an alighting station information, etc. The reminder information may include, for example, a reminder for at least one selected from a transfer station, an alighting station, etc.

For example, when the travel mode is cycling, the second related information may include at least one selected from: a weather condition information, a route plan information, a route information, a reminder information, a remaining-distance information, a remaining-time-consumption information, an estimated-arrival-time instant information, a recommended parking spot information, etc. The weather condition information may include, for example, at least one selected from: an outdoor travel suitability information, an abnormal weather information, a temperature information, a wind information, a visibility information, etc. The reminder information may include, for example, a reminder of soon arriving at the travel destination.

For example, when the travel mode is walking, the second related information may include at least one selected from: a weather condition information, a route plan information, a route information, a reminder information, a remaining-distance information, a remaining-time-consumption information, an estimated-arrival-time instant information, etc.

For example, when the travel mode is taxi travel, the second related information may include at least one selected from: a real-time traffic information, a route plan information, a reminder information, a real-time taxi fare information, a remaining-distance information, a remaining-time-consumption information, an estimated-arrival-time instant information, a better route plan information, etc. The reminder information may include, for example, a reminder of a deviation from the route.

According to embodiments of the present disclosure, the current travel state may include a pre-travel state, an in-travel state, and a travel-end state. Different travel stage recommendation information may correspond to different travel modes and/or different current travel states.

For example, when the current travel state is the pre-travel state and the travel mode is self-driving travel, the travel stage recommendation information may include at least one selected from: a current road condition and congestion information, a route-plan and estimated-time-consumption information, an information of traffic restriction, construction or closure, a business state information of a POI, a parking lot information of a destination, an entrance information of a parking lot at a destination, a remaining parking place information of a parking lot at a destination, a foot traffic information, a queuing information, a discount information of a POI, and/or other information.

For example, when the current travel state is the pre-travel state and the travel mode is public transportation travel, the travel stage recommendation information may include at least one selected from: a route plan information that may include an estimated-time-consumption information, a cost information and/or a walking distance information; a transfer station or alighting station information; a real-time subway or bus information; a business state information of a POI; a foot traffic information and a queuing information; a discount information of a POI; and/or other information.

For example, when the current travel state is the pre-travel state and the travel mode is cycling, the travel stage recommendation information may include at least one selected from: a weather condition information that may include at least one selected from an outdoor travel suitability information, an abnormal weather information, a temperature information, a wind information, a visibility information, etc.; a route-plan and estimated-time-consumption information; a business state information of a POI; a foot traffic information and a queuing information; a discount information of a POI; and/or other information.

For example, when the current travel state is the pre-travel state and the travel mode is walking, the travel stage recommendation information may include at least one selected from: a weather condition information that may include at least one selected form an outdoor travel suitability information, an abnormal weather information, a temperature information, a wind information, a visibility information, etc.; a destination entrance and location information; a route-plan and estimated-time-consumption information; a business state information of a POI; a foot traffic information and a queuing information; a discount information of a POI; and/or other information.

For example, when the current travel state is the pre-travel state and the travel mode is taxi travel, the travel stage recommendation information may include at least one selected from: an information of estimating, viewing or verifying taxi fare, an estimated-time-consumption information, a business state information of a POI, a foot traffic information and a queuing information, a discount information of a POI, and/or other information.

For example, when the current travel state is the in-travel state and the travel mode is self-driving travel, the travel stage recommendation information may include at least one selected from: a route information and a reminder, such as a reminder of turning, highway exit, etc.; a peccancy monitoring information such as a velocity measurement information and a reminder; a real-time road condition and congestion information; an information of remaining distance, remaining time consumption and estimated arrival time instant; an information of traffic restriction, construction or closure of a road ahead; an information of better route plan and estimated time consumption; an information of reminding a parking lot entrance at a destination and a remaining parking place information of a parking lot at a destination; a real view information of a destination; and/or other information. It should be noted that in this case, the POI related information may not be recommended so as to improve the user's concentration during driving.

For example, when the current travel state is the in-travel state and the travel mode is public transportation travel, the travel stage recommendation information may include at least one selected from: an information of transfer station, alighting station, current station and/or transfer reminder, an information of remaining distance and remaining time consumption, an information of introduction, picture, photo album, ranking, ranking list, comment and/or opening hours of a POI at a destination, a queuing information and an online-queuing function information, a discount information of a POI, an information of new product, popular goods and/or recommended dishes, an online meal-ordering function, a bus or subway hub exit information, a walking route information for reaching a final destination, a real view information of a destination, and/or other information.

For example, when the current travel state is the in-travel state and the travel mode is cycling, the travel stage recommendation information may include at least one selected from: a route information and a reminder, such as a reminder of turning or highway exit information; an information of remaining distance and remaining time consumption; a reminder information of soon arriving; a recommended parking spot information, a real view information of a destination, etc. The demand for a voice and sound reminder may be increased during the cycling of the user.

For example, when the current travel state is the in-travel state and the travel mode is walking, the travel stage recommendation information may include at least one selected from: a route information and a reminder, such as a reminder of turning information; an information of remaining distance and remaining time consumption; a reminder information of soon arriving; a real view information of a destination; a building entrance and location information of a destination; and/or other information.

For example, when the current travel state is the in-travel state and the travel mode is taxi travel, the travel stage recommendation information may include at least one selected from: a real-time road condition and congestion information, a route deviation reminder information, an information of viewing real-time taxi fare, an information of remaining distance and remaining time consumption, an information of reminding better route plan and estimated time consumption, an information of introduction, picture, photo album, ranking, ranking list, comment and/or opening hours of a POI at a destination, a queuing information and an online-queuing function information, a discount information of a POI, an information of new products, popular goods and/or recommended dishes, an online meal-ordering function, a reminder information of soon arriving, a walking route information for reaching a final destination, a real view information of a destination, and/or other information.

For example, when the current travel state is the travel-end state and the travel mode is self-driving travel, the travel stage recommendation information may include at least one selected from: an information of a parking lot at a destination, an entrance of a parking lot and/or remaining parking places, a building entrance information of a destination, an information of a walking route from a parking lot to a final destination, a real view information of a POI at a final destination, a strategy information for a business circle or shopping mall where a destination is located and a recommendation and discount information of surrounding stores, a queuing information and an online-queuing function information of a POI at a destination, a discount information of a POI at a destination, an information of new products, popular goods and recommended dishes, an online meal-ordering function information, an opening hours information, an information of reminding one hour before closing time, and/or other information. In other embodiments, the travel stage recommendation information may further include at least one selected from: a reservation information, a consumption order information or a ticket verification information for a POI at a destination; an information of touring route and guide map of a POI at a destination; and/or other information.

For example, when the current travel state is the travel-end state and the travel mode is public transportation travel, the travel stage recommendation information may include at least one selected from: an information of a bus or subway hub exit and a walking route for reaching a final destination, a building entrance information of a destination, a real view information of a POI at a destination, a strategy information for a business circle or shopping mall where a destination is located and a recommendation and discount information of surrounding stores, a queuing information and an online-queuing function information of a POI at a destination, a discount information of a POI at a destination, an information of new products, popular goods and/or recommended dishes, an online meal-ordering function information, an opening hours information, an information of reminding one hour before closing time, and/or other information. In other embodiments, the travel stage recommendation information may further include at least one selected from: a reservation information, a consumption order information and/or a ticket verification information for a POI at a destination; an information of touring route and guide map of a POI at a destination; and/or other information.

For example, when the current travel state is the travel-end state and the travel mode is cycling, the travel stage recommendation information may include at least one selected from: a recommended parking spot information, a building entrance information of a destination, a walking route information for reaching a final destination, a real view information of a POI at a destination, a strategy information for a business circle or shopping mall where a destination is located and a recommendation and discount information of surrounding stores, a queuing information and an online-queuing function information of a POI at a destination, a discount information of a POI at a destination, an information of new products, popular goods and/or recommended dishes, an online meal-ordering function information, an opening hours information, an information of reminding one hour before closing time, and/or other information. In other embodiments, the travel stage recommendation information may further include at least one selected from: a reservation information, a consumption order information and/or a ticket verification information for a POI at a destination; an information of touring route and guide map of a POI at a destination; and/or other information.

For example, when the current travel state is the travel-end state and the travel mode is walking, the travel stage recommendation information may include at least one selected from: a real view information of a POI at a destination, a building entrance and location information of a destination, a strategy information for a business circle or shopping mall where a destination is located and a recommendation and discount information of surrounding stores, a queuing information and an online-queuing function information of a POI at a destination, a discount information of a POI at a destination, an information of new products, popular goods and/or recommended dishes, an online meal-ordering function information, an opening hours information, an information of reminding one hour before closing time, and/or other information. In other embodiments, the travel stage recommendation information may further include at least one selected from: a reservation information, a consumption order information and/or a ticket verification information for a POI at a destination; an information of touring route and guide map of a POI at a destination; and/or other information.

For example, when the current travel state is the travel-end state and the travel mode is taxi travel, the travel stage recommendation information may include at least one selected from: a walking route information for reaching a final destination, a real view information of a POI at a destination, a building entrance and location information of a destination, a strategy information for a business circle or shopping mall where a destination is located and a recommendation and discount information of surrounding stores, a queuing information and an online-queuing function information of a POI at a destination, a discount information of a POI at a destination, an information of new products, popular goods and/or recommended dishes, an online meal-ordering function information, an opening hours information, an information of reminding one hour before closing time, and/or other information. In other embodiments, the travel stage recommendation information may further include at least one selected from: a reservation information, a consumption order information and/or a ticket verification information for a POI at a destination; an information of touring route and guide map of a POI at a destination; and/or other information.

According to embodiments of the present disclosure described above, the related information may be pertinently recommended according to different travel modes and different travel stages, so that an intelligent and dynamic recommendation of information may be achieved in the whole travel scene, and an information validity may be improved.

According to embodiments of the present disclosure, the method of determining that the current travel state is the pre-travel state may include determining, in response to a route query request for the travel destination being received, that the current travel state is the pre-travel state.

According to embodiments of the present disclosure, when the POI information is searched or selected by the user and a route query interface is entered by the user, it may indicate that the travel state is the pre-travel state, and the corresponding travel stage is a pre-travel stage.

According to embodiments of the present disclosure, the pre-travel state may be recognized, so that a recommendation information for the pre-travel state may be output to achieve an intelligent and dynamic recommendation of information.

According to embodiments of the present disclosure, the method of determining that the current travel state is the in-travel state may include determining, in response to a detection that a navigation for going to the travel destination is started, that the current travel state is the in-travel state.

According to embodiments of the present disclosure, when the user turns on a navigation or performs other operations for acquiring a user travel information, it may indicate that the travel state is the in-travel state, and the corresponding travel stage is an in-travel stage.

According to embodiments of the present disclosure, the in-travel state may be recognized, so that a recommendation information for the in-travel state may be output to achieve an intelligent and dynamic recommendation of information.

According to embodiments of the present disclosure, the method of determining that the current travel state is the travel-end state may include: determining a target location of an end of the navigation in response to a detection that the navigation for going to the travel destination is ended; and determining that the current travel state is the travel-end state, in response to the target location being matched with a location of the travel destination.

According to embodiments of the present disclosure, when the navigation used by a user is ended and it is positioned that the user has arrived at the destination, it may indicate that the travel state is the travel-end state, and the corresponding travel stage is a travel-end stage.

According to embodiments of the present disclosure described above, the travel-end state may be recognized, so that a recommendation information for the travel-end state may be output to achieve an intelligent and dynamic recommendation of information.

It should be noted that the above-mentioned methods of determining the pre-travel state, the in-travel state and the travel-end state are only exemplary embodiments. The present disclosure is not limited to this, and may further include other determining methods known in the art, as long as the pre-travel state, the in-travel state and the travel-end state may be determined.

According to embodiments of the present disclosure, determining the second related information related to the travel mode in response to the travel mode selected for going to the travel destination may include: determining a travel route for going to the travel destination according to the travel mode; and determining an information related to the travel route as the second related information.

According to embodiments of the present disclosure, for example, the travel mode may include at least one selected from: self-driving travel, public transportation travel, cycling, taxi travel, etc. If the travel route determined according to the travel mode contains, for example, an information of traffic restriction, construction, and/or public transportation suspension, then the information of traffic restriction, construction, and/or public transportation suspension may be determined as the second related information related to the travel mode. The related information may be output to the user in the pre-travel state so that the condition of the travel route may be obtained by a user in time, and thus a travel loss is reduced.

According to embodiments of the present disclosure, the related information may be generated in combination with the route condition of the travel route, so that a travel plan may be adjusted by a user in time according to the related information, and thus a travel loss is reduced.

According to embodiments of the present disclosure, the target related information includes: a first target related information selected from the first related information; and a second target related information selected from the second related information. When it is determined that the current travel state is the in-travel state, obtaining the travel stage recommendation information corresponding to the current travel state according to the target related information includes: acquiring in real time a travel location at a travel stage corresponding to the in-travel state; obtaining, in response to a determination that a distance between the travel location and the location of the travel destination is greater than a predetermined threshold, the travel stage recommendation information corresponding to the in-travel state, according to the second target related information; and obtaining, in response to a determination that the distance between the travel location and the location of the travel destination is less than or equal to the predetermined threshold, the travel stage recommendation information corresponding to the in-travel state, according to the first target related information and the second target related information.

According to embodiments of the present disclosure, for example, when the travel mode is taxi travel, the travel state is the in-travel state, and the travel location is far from the location of the travel destination, that is, the distance between the travel location and the location of the travel destination is greater than the predetermined threshold, the preferred recommendation information may include at least one selected from: a real-time road condition and congestion information, a route plan deviation reminder information, a real-time taxi fare view information, an information of remaining distance and remaining time consumption, a reminder information of better route plan and estimated time consumption, an information of introduction, picture, photo album, ranking, ranking list, comment, opening hours of a POI of a destination, a queuing information and an online-queuing function information, a discount information of a POI, an information of new products, popular goods and/or recommended dishes, an online meal-ordering function information, and/or other information. When it is detected that the travel location is close to the location of the travel destination, that is, the distance between the travel location and the location of the travel destination is less than or equal to the predetermined threshold, at least one selected from a reminder information of soon arriving, a walking route information for reaching a final destination, a real view information of a destination, and/or other information may be additionally recommended.

According to embodiments of the present disclosure, different information may be recommended at different stages in the in-travel state, so that an availability of the recommendation information may be improved, and a waste of resources due to unnecessary information being recommended may be reduced.

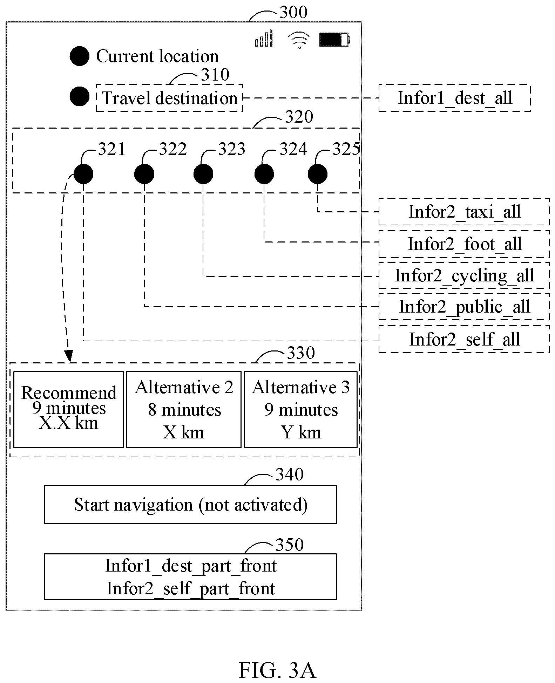

FIG. 3A schematically shows a schematic diagram of a method of recommending an information for a pre-travel state according to embodiments of the present disclosure.

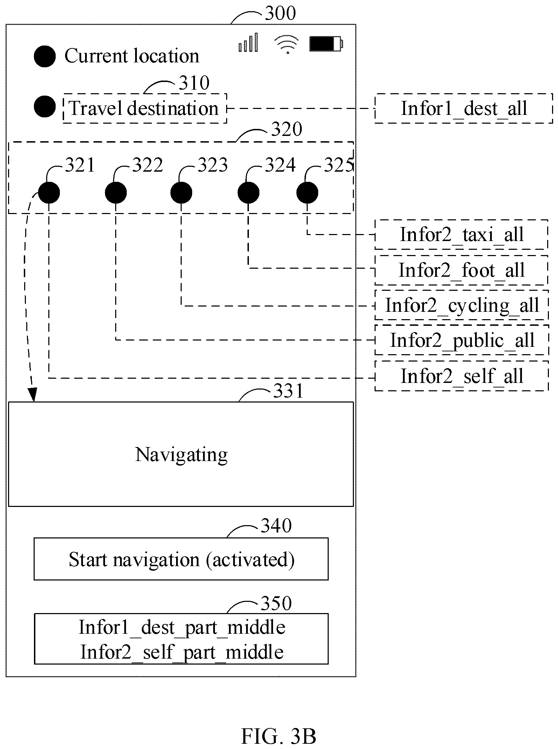

FIG. 3B schematically shows a schematic diagram of a method of recommending an information for an in-travel state according to embodiments of the present disclosure.

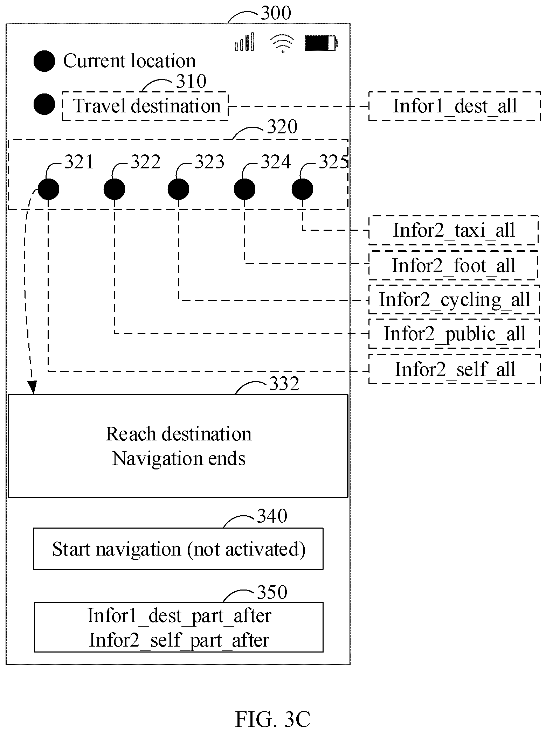

FIG. 3C schematically shows a schematic diagram of a method of recommending an information for a travel-end state according to embodiments of the present disclosure.

As shown in FIG. 3A to FIG. 3C, a travel destination 310 is searched in a map and a route query interface 300 is entered. After entering the interface 300, a first related information Infor1_dest_all related to the travel destination 310 may be acquired accordingly. A travel mode 320 for going to the travel destination from the current location may be presented on the route query interface 300. The travel mode 320 may include self-driving travel 321, a public transportation travel 322, cycling 323, walking 324, taxi travel 325, etc., and each travel mode may correspond to at least one travel route 330. When a travel mode is selected, a second related information Infor2_mode_all related to the travel mode may be obtained accordingly, where "mode" may be expressed as a corresponding travel mode. For example, the second related information Infor2_self_all, Infor2_public_all, Infor2 cycling all, Infor2 foot_all, and Infor2_taxi_all may be obtained accordingly for the travel modes of self-driving travel 321, public transportation travel 322, cycling 323, walking 324, and taxi travel 325. After that, a recommendation information 350 to be output may be determined according to the first related information obtained as above and the second related information corresponding to the selected travel mode in combination with the current travel state.

As shown in FIG. 3A, when the selected travel mode is, for example, self-driving travel, the travel route 330 may be obtained accordingly. If a navigation 340 for the travel route 330 on the route query interface 300 is not started, it may indicate that the current travel state is the pre-travel state, then third related information Infor1_dest_part_front and Infor2_self_part_front may be determined according to the first related information Infor1_dest_all and the second related information Infor2_self_all. The Infor1_dest_part_front may represent partial information in the Infor1_dest_all, and the Infor2_self_part_front may represent partial information in the Infor2_self_all. Thus, when the selected travel mode is, for example, self-driving travel, and a navigation 340 for any travel route 330 on the route query interface 300 is not started, an information represented by the Infor1_dest_part_front and the Infor2_self_part_front may be output as the recommendation information 350 at the pre-travel stage.

As shown in FIG. 3B, 331 indicates that the navigation is started. When the selected travel mode is, for example, self-driving travel, and the navigation 340 for a travel route 330 on the route query interface 300 is started, it may indicate that the current travel state is the in-travel state. Then, third related information Infor1_dest_part_middle and Infor2_self_part _middle may be determined according to the first related information Infor1_dest_all and the second related information Infor2_self_all. The Infor1_dest_part_middle may represent partial information in the Infor1_dest_all, and the Infor2_self_part_middle may represent partial information in the Infor2_self_all. Thus, when the selected travel mode is, for example, self-driving travel, and a navigation 340 for a travel route 330 on the route query interface 300 is started, the information represented by the Infor1_dest_part_middle and the Infor2_self_part_middle may be output as the recommendation information 350 at the in-travel stage.

As shown in FIG. 3C, 332 indicates the destination is reached, and the navigation is ended. When the navigation is ended and the destination is reached, it may indicate that the current travel state is the travel-end state. When the selected travel mode is, for example, self-driving travel, third related information Infor1_dest_part_after and Infor2_self_part _after may be determined, for example, according to the first related information Infor1_dest_all and the second related information Infor2_self_all. The Infor1_dest_part_after may represent partial information in the Infor1_dest_all, and the Infor2_self_part_after may represent partial information in the Infor2_self_all. Thus, when the selected travel mode is, for example, self-driving travel, while the navigation is ended and the destination is reached, the information represented by the Infor1_dest_part_after and the Infor2_self_part_after may be output as the recommendation information 350 at the travel-end stage.

It should be noted that the Infor1_dest_part_front, the Infor1_dest_part_middle and the Infor1_dest_part_after may contain a same information or different information. The Infor2_self_part_front, the Infor2_self_part_middle and the Infor2_self_part _after may contain a same information or different information.

Through embodiments of the present disclosure described above, it is possible to make full use of advantages of the map in data and recognition of user's dynamic travel, the information required by the user may be provided pertinently at different travel stages, so as to improve an efficiency of information acquisition by a user, make the recommendation of POI information on the map more scenario-based, intelligent and dynamic, and improve an experience for an intelligent map.

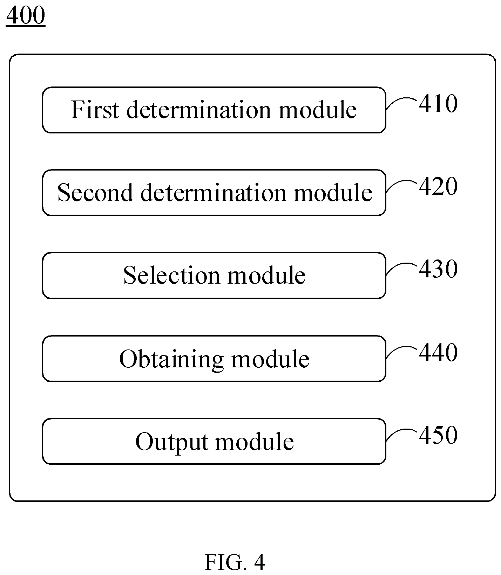

FIG. 4 schematically shows a block diagram of an apparatus of recommending an information according to embodiments of the present disclosure.

As shown in FIG. 4, an apparatus 400 of recommending an information includes a first determination module 410, a second determination module 420, a selection module 430, a obtaining module 440, and an output module 450.

The first determining module 410 is used to determine a first related information related to a travel destination.

The second determination module 420 is used to determine, in response to a travel mode selected for going to the travel destination, a second related information related to the travel mode.

The selection module 430 is used to determine, from the first related information and the second related information, a target related information matched with a current travel state, according to the current travel state related to going to the travel destination in the travel mode.

The obtaining module 440 is used to obtain, according to the target related information, a travel stage recommendation information corresponding to the current travel state.

The output module 450 is used to output the travel stage recommendation information.

According to embodiments of the present disclosure, the apparatus of recommending the information may further include a third determination module.

The third determination module is used to determine that the current travel state is a pre-travel state, in response to a route query request for the travel destination being received.

The apparatus of recommending the information further includes a fourth determination module.

The fourth determination module is used to determine that the current travel state is an in-travel state, in response to a detection that a navigation for going to the travel destination is started.

According to embodiments not falling within the scope of the claims, the apparatus of recommending the information may further include a fifth determination module and a sixth determination module.

The fifth determination module is used to determine, in response to a detection that a navigation for going to the travel destination is ended, a target location of an end of the navigation.

The sixth determination module is used to determine that the current travel state is a travel-end state, in response to the target location being matched with a location of the travel destination.

According to embodiments of the present disclosure, the second determination module includes a determination unit and a definition unit.

The determination unit is used to determine a travel route for going to the travel destination according to the travel mode.

The definition unit is used to determine an information related to the travel route as the second related information.

The target related information includes a first target related information selected from the first related information and a second target related information selected from the second related information. When it is determined that the current travel state is an in-travel state, the obtaining module includes an acquisition unit, a first obtaining unit, and a second obtaining unit.

The acquisition unit is used to acquire in real time a travel location at a travel stage corresponding to the in-travel state.

The first obtaining unit is used to obtain the travel stage recommendation information corresponding to the in-travel state according to the second target related information, in response to a determination that a distance between the travel location and a location of the travel destination is greater than a predetermined threshold.

The second obtaining unit is used to obtain the travel stage recommendation information corresponding to the in-travel state according to the first target related information and the second target related information, in response to a determination that the distance between the travel location and the location of the travel destination is less than or equal to the predetermined threshold.

According to embodiments of the present disclosure, the present disclosure further provides a readable storage medium, and a computer program product.

An electronic device not falling within the scope of the claims is provided, which includes: at least one processor; and a memory communicatively connected to the at least one processor. The memory stores instructions executable by the at least one processor, and the instructions, when executed by the at least one processor, cause the at least one processor to implement the methods of recommending the information as described above.

According to embodiments of the present disclosure, a non-transitory computer-readable storage medium having computer instructions therein is provided, and the computer instructions are used to cause a computer to implement the methods of recommending the information as described above.

According to embodiments of the present disclosure, a computer program product containing a computer program is provided, and the computer program, when executed by a processor, causes the processor to implement the methods of recommending the information as described above.

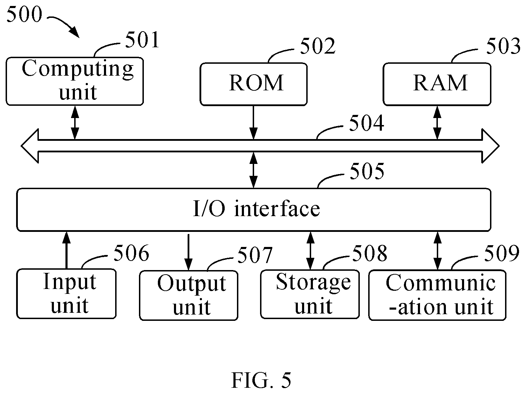

FIG. 5 shows a schematic block diagram of an exemplary electronic device 500, not falling within the scope of the claims, for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 5, the electronic device 500 includes a computing unit 501 which may perform various appropriate actions and processes according to a computer program stored in a read only memory (ROM) 502 or a computer program loaded from a storage unit 508 into a random access memory (RAM) 503. In the RAM 503, various programs and data necessary for an operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, or a mouse; an output unit 507, such as displays or speakers of various types; a storage unit 508, such as a disk, or an optical disc; and a communication unit 509, such as a network card, a modem, or a wireless communication transceiver. The communication unit 509 allows the electronic device 500 to exchange information/data with other devices through a computer network such as Internet and/or various telecommunication networks.

The computing unit 501 may be various general-purpose and/or dedicated processing assemblies having processing and computing capabilities. Some examples of the computing units 501 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 501 executes various methods and steps described above, such as the method of recommending the information. For example, in some embodiments, the method of recommending the information may be implemented as a computer software program which is tangibly embodied in a machine-readable medium, such as the storage unit 508. In some embodiments, the computer program may be partially or entirely loaded and/or installed in the electronic device 500 via the ROM 502 and/or the communication unit 509. The computer program, when loaded in the RAM 503 and executed by the computing unit 501, may execute one or more steps in the method of recommending the information described above. Alternatively, in other embodiments, the computing unit 501 may be configured to perform the method of recommending the information by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

The above-mentioned specific embodiments do not constitute a limitation on the scope of protection of the present disclosure. Those skilled in the art should understand that various modifications, combinations, sub-combinations and substitutions may be made according to design requirements and other factors whilst still remaining within the scope of the appended claims.

## Claims

1. A method of recommending an information, comprising:
determining (S210) a first related information related to a travel destination;
determining (S220), in response to a travel mode selected for going to the travel destination, a second related information related to the travel mode;
determining (S230), from the first related information and the second related information, a target related information matched with a current travel state, according to the current travel state related to going to the travel destination in the travel mode, wherein the target related information comprises: a first target related information selected from the first related information, and a second target related information selected from the second related information;
obtaining (S240), according to the target related information, a travel stage recommendation information corresponding to the current travel state; and
outputting (S250) the travel stage recommendation information,
the method further comprising:
determining that the current travel state is an in-travel state, in response to a detection that a navigation for going to the travel destination is started,
wherein in response to the current travel state being determined as the in-travel state, the obtaining, according to the target related information, a travel stage recommendation information corresponding to the current travel state comprises:
acquiring in real time a travel location at a travel stage corresponding to the in-travel state;
obtaining the travel stage recommendation information corresponding to the in-travel state according to the second target related information, in response to a determination that a distance between the travel location and a location of the travel destination is greater than a predetermined threshold; and
obtaining the travel stage recommendation information corresponding to the in-travel state according to the first target related information and the second target related information, in response to a determination that the distance between the travel location and the location of the travel destination is less than or equal to the predetermined threshold.

2. The method according to claim 1, further comprising:
determining that the current travel state is a pre-travel state, in response to a route query request for the travel destination being received.

3. The method according to claim 1, wherein the determining (S220), in response to a travel mode selected for going to the travel destination, a second related information related to the travel mode comprises:
determining a travel route for going to the travel destination according to the travel mode; and
determining an information related to the travel route as the second related information.

4. An apparatus (400) of recommending an information, comprising:
a first determination module (410) configured to determine a first related information related to a travel destination;
a second determination module (420) configured to determine, in response to a travel mode selected for going to the travel destination, a second related information related to the travel mode;
a selection module (430) configured to determine, from the first related information and the second related information, a target related information matched with a current travel state, according to the current travel state related to going to the travel destination in the travel mode, wherein the target related information comprises a first target related information selected from the first related information, and a second target related information selected from the second related information;
an obtaining module (440) configured to obtain, according to the target related information, a travel stage recommendation information corresponding to the current travel state; and
an output module (450) configured to output the travel stage recommendation information,
the apparatus (400) further comprising:
a fourth determination module configured to determine that the current travel state is an in-travel state, in response to a detection that a navigation for going to the travel destination is started,
wherein in response to the current travel state being determined as the in-travel state, the obtaining module (440) comprises:
an acquisition unit configured to acquire in real time a travel location at a travel stage corresponding to the in-travel state;
a first obtaining unit configured to obtain the travel stage recommendation information corresponding to the in-travel state according to the second target related information, in response to a determination that a distance between the travel location and a location of the travel destination is greater than a predetermined threshold; and
a second obtaining unit configured to obtain the travel stage recommendation information corresponding to the in-travel state according to the first target related information and the second target related information, in response to a determination that the distance between the travel location and the location of the travel destination is less than or equal to the predetermined threshold.

5. The apparatus (400) according to claim 4, further comprising:
a third determination module configured to determine that the current travel state is a pre-travel state, in response to a route query request for the travel destination being received.

6. The apparatus (400) according to claim 4, wherein the second determination module (420) comprises:
a determination unit configured to determine a travel route for going to the travel destination according to the travel mode; and
a definition unit configured to determine an information related to the travel route as the second related information.

7. A non-transitory computer-readable storage medium having computer instructions therein, wherein the computer instructions are configured to cause a computer to implement the method of any one of claims 1 to 3.

8. A computer program product containing a computer program, wherein the computer program, when executed by a processor, causes the processor to implement the method of any one of claims 1 to 3.

## Patentansprüche

1. Verfahren zum Empfehlen einer Information, umfassend:
Bestimmen (S210) einer ersten zugehörigen Information, die sich auf ein Reiseziel bezieht;
Bestimmen (S220), als Reaktion auf einen für die Fahrt zum Reiseziel ausgewählten Reisemodus, einer zweiten zugehörigen Information, die sich auf den Reisemodus bezieht;
Bestimmen (S230) einer zielbezogenen Information, die mit einem aktuellen Reisezustand übereinstimmt, aus der ersten zugehörigen Information und der zweiten zugehörigen Information, gemäß dem aktuellen Reisezustand in Bezug auf die Fahrt zum Reiseziel im Reisemodus, wobei die zielbezogene Information Folgendes umfasst: eine erste zielbezogene Information, die aus der ersten zugehörigen Information ausgewählt wird, und eine zweite zielbezogene Information, die aus der zweiten zugehörigen Information ausgewählt wird;
Erhalten (S240) einer Reiseetappen-Empfehlungsinformation, die dem aktuellen Reisezustand entspricht, gemäß der zielbezogenen Information; und
Ausgeben (S250) der Reiseetappen-Empfehlungsinformation,
wobei das Verfahren weiter Folgendes umfasst:
Bestimmen, dass der aktuelle Reisezustand ein Fahrtzustand ist, als Reaktion auf ein Erkennen, dass eine Navigation für die Fahrt zum Fahrtziel gestartet wurde,
wobei als Reaktion darauf, dass der aktuelle Reisezustand als der Fahrtzustand bestimmt wird, das Erhalten einer Reiseetappen-Empfehlungsinformation, die dem aktuellen Reisezustand entspricht, gemäß der zielbezogenen Information Folgendes umfasst:
Erfassen eines Reiseortes in Echtzeit in einer Reiseetappe, die dem Reisezustand entspricht;
Erhalten der Reiseetappen-Empfehlungsinformation, die dem Fahrtzustand entspricht, gemäß der zweiten zielbezogenen Information als Reaktion auf eine Bestimmung, dass eine Entfernung zwischen dem Reiseort und einem Ort des Reiseziels größer als ein vorbestimmter Schwellenwert ist; und
Erhalten der Reiseetappen-Empfehlungsinformation, die dem Fahrtzustand entspricht, gemäß der ersten zielbezogenen Information und der zweiten zielbezogenen Information als Reaktion auf eine Bestimmung, dass die Entfernung zwischen dem Reiseort und dem Ort des Reiseziels kleiner oder gleich dem vorbestimmten Schwellenwert ist.

2. Verfahren nach Anspruch 1, weiter umfassend:
Bestimmen, dass der aktuelle Reisezustand ein Vor-Reisezustand ist, als Reaktion auf den Empfang einer Routenanfrage für das Reiseziel.

3. Verfahren nach Anspruch 1, wobei das Bestimmen (S220) einer zweiten zugehörigen Information, die sich auf den Reisemodus bezieht, als Reaktion auf einen für die Fahrt zum Reiseziel ausgewählten Reisemodus Folgendes umfasst:
Bestimmen einer Reiseroute für die Fahrt zum Reiseziel gemäß dem Reisemodus; und
Bestimmen auf die Reiseroute bezogene Information als die zweite zugehörige Information.

4. Vorrichtung (400) zum Empfehlen einer Information, die Folgendes umfasst:
ein erstes Bestimmungsmodul (410), das so konfiguriert ist, dass es eine erste zugehörige Information bestimmt, die sich auf ein Reiseziel bezieht;
ein zweites Bestimmungsmodul (420), das so konfiguriert ist, dass es als Reaktion auf einen für die Fahrt zum Reiseziel ausgewählten Reisemodus eine zweite zugehörige Information bestimmt, die sich auf den Reisemodus bezieht;
ein Auswahlmodul (430), das so konfiguriert ist, dass es aus der ersten zugehörigen Information und der zweiten zugehörigen Information gemäß dem aktuellen Reisezustand, der sich auf die Fahrt zum Reiseziel im Reisemodus bezieht, eine zielbezogene Information bestimmt, die mit einem aktuellen Reisezustand übereinstimmt, wobei die zielbezogene Information eine erste zielbezogene Information, die aus der ersten zugehörigen Information ausgewählt wird, und eine zweite zielbezogene Information, die aus der zweiten zugehörigen Information ausgewählt wird, umfasst;
ein Erhaltungsmodul (440), das so konfiguriert ist, dass es gemäß der zielbezogenen Information eine Reiseetappen-Empfehlungsinformation erhält, die dem aktuellen Reisezustand entspricht; und
ein Ausgabemodul (450), das so konfiguriert ist, dass es die Reiseetappen-Empfehlungsinformation ausgibt,
wobei die Vorrichtung (400) weiter Folgendes umfasst:
ein viertes Bestimmungsmodul, das so konfiguriert ist, dass es als Reaktion auf ein Erkennen, dass eine Navigation für die Fahrt zum Fahrtziel gestartet wurde, bestimmt, dass der aktuelle Reisezustand ein Fahrtzustand ist,
wobei das Erhaltungsmodul (440) als Reaktion darauf, dass der aktuelle Reisezustand als der Fahrtzustand bestimmt wurde, Folgendes umfasst:
eine Erfassungseinheit, die so konfiguriert ist, dass sie in Echtzeit einen Reiseort in einer Reiseetappe erfasst, die dem Fahrtzustand entspricht;
eine erste Erhaltungseinheit, die so konfiguriert ist, dass sie die Reiseetappen-Empfehlungsinformation, die dem Fahrtzustand entspricht, gemäß der zweiten zielbezogenen Information als Reaktion auf eine Bestimmung erhält, dass eine Entfernung zwischen dem Reiseort und einem Ort des Reiseziels größer als ein vorbestimmter Schwellenwert ist; und
eine zweite Erhaltungseinheit, die so konfiguriert ist, dass sie die Reiseetappen-Empfehlungsinformation, die dem Fahrtzustand entspricht, gemäß der ersten zielbezogenen Information und der zweiten zielbezogenen Information als Reaktion auf eine Bestimmung erhält, dass die Entfernung zwischen dem Reiseort und dem Ort des Reiseziels kleiner oder gleich dem vorbestimmten Schwellenwert ist.

5. Vorrichtung (400) nach Anspruch 4, weiter umfassend:
ein drittes Bestimmungsmodul, das so konfiguriert ist, dass es als Reaktion auf den Empfang einer Routenanfrage für das Reiseziel bestimmt, dass der aktuelle Reisezustand ein Vor-Reisezustand ist.

6. Vorrichtung (400) nach Anspruch 4, wobei das zweite Bestimmungsmodul (420) Folgendes umfasst:
eine Bestimmungseinheit, die so konfiguriert ist, dass sie eine Reiseroute für die Fahrt zum Reiseziel gemäß dem Reisemodus bestimmt; und
eine Festlegungseinheit, die so konfiguriert ist, dass sie eine auf die Reiseroute bezogene Information als die zweite zugehörige Information bestimmt.

7. Nicht-transitorisches computerlesbares Speichermedium, das Computeranweisungen darauf gespeichert aufweist, wobei die Computeranweisungen so konfiguriert sind, dass sie einen Computer veranlassen, das Verfahren nach einem der Ansprüche 1 bis 3 zu implementieren.

8. Computerprogramm-Produkt, das ein Computerprogramm enthält, wobei das Computerprogramm, wenn es von einem Prozessor ausgeführt wird, den Prozessor veranlasst, das Verfahren nach einem der Ansprüche 1 bis 3 zu implementieren.

## Revendications

1. Procédé de recommandation d'une information, comprenant :
la détermination (S210) d'une première information associée qui est associée à une destination de déplacement ;
la détermination (S220), en réponse à un mode de déplacement sélectionné pour aller vers la destination de déplacement, d'une deuxième information associée qui est associée au mode de déplacement ;
la détermination (S230), à partir de la première information associée et de la deuxième information associée, d'une information associée cible correspondant à un état de déplacement actuel, selon l'état de déplacement actuel associé au fait d'aller vers la destination de déplacement dans le mode de déplacement, dans lequel l'information associée cible comprend : une première information associée cible sélectionnée à partir de la première information associée, et une deuxième information associée cible sélectionnée à partir de la deuxième information associée ;
l'obtention (S240), selon les informations associées cibles, d'une information de recommandation d'étape de déplacement correspondant à l'état de déplacement actuel ; et
la délivrance en sortie (S250) de l'information de recommandation d'étape de déplacement,
le procédé comprenant en outre :
la détermination que l'état de déplacement actuel est un état de déplacement en cours, en réponse à une détection qu'une navigation pour aller vers la destination de déplacement est commencée,
dans lequel en réponse à la détermination que l'état de déplacement actuel est l'état de déplacement en cours, l'obtention, selon les informations associées cibles, d'une information de recommandation d'étape de déplacement correspondant à l'état de déplacement actuel comprend :
l'acquisition en temps réel d'un emplacement de déplacement à une étape de déplacement correspondant à l'état de déplacement en cours ;
l'obtention de l'information de recommandation d'étape de déplacement correspondant à l'état de déplacement en cours selon la deuxième information associée cible, en réponse à une détermination qu'une distance entre l'emplacement de déplacement et un emplacement de la destination de déplacement est supérieure à un seuil prédéterminé ; et
l'obtention de l'information de recommandation d'étape de déplacement correspondant à l'état de déplacement en cours selon la première information associée cible et la deuxième information associée cible, en réponse à une détermination que la distance entre l'emplacement de déplacement et l'emplacement de la destination de déplacement est inférieure ou égale au seuil prédéterminé.

2. Procédé selon la revendication 1, comprenant en outre :
la détermination que l'état de déplacement actuel est un état de déplacement en cours, en réponse à la réception d'une demande d'interrogation d'itinéraire pour la destination de déplacement.

3. Procédé selon la revendication 1, dans lequel la détermination (S220), en réponse à un mode de déplacement sélectionné pour aller vers la destination de déplacement, d'une deuxième information associée au mode de déplacement comprend :
la détermination d'un itinéraire de déplacement pour aller vers la destination de déplacement selon le mode de déplacement ; et
la détermination qu'une information associée à l'itinéraire de déplacement est la deuxième information associée.

4. Appareil (400) de recommandation d'une information, comprenant :
un premier module de détermination (410) configuré pour déterminer une première information associée à une destination de déplacement ;
un deuxième module de détermination (420) configuré pour déterminer, en réponse à un mode de déplacement sélectionné pour aller vers la destination de déplacement, une deuxième information associée qui est associée au mode de déplacement ;
un module de sélection (430) configuré pour déterminer, à partir de la première information associée et de la deuxième information associée, une information associée cible correspondant à un état de déplacement actuel, selon l'état de déplacement actuel associé à un aller vers la destination de déplacement dans le mode de déplacement, dans lequel l'information associée cible comprend une première information associée cible sélectionnée à partir de la première information associée, et une deuxième information associée cible sélectionnée à partir de la deuxième information associée ;
un module d'obtention (440) configuré pour obtenir, selon les informations associées cibles, une information de recommandation d'étape de déplacement correspondant à l'état de déplacement actuel ; et
un module de sortie (450) configuré pour délivrer en sortie les informations de recommandation d'étape de déplacement,
l'appareil (400) comprenant en outre :
un quatrième module de détermination configuré pour déterminer que l'état de déplacement actuel est un état de déplacement en cours, en réponse à une détection qu'une navigation pour aller vers la destination de déplacement est commencée,
dans lequel en réponse à la détermination selon laquelle l'état de déplacement actuel est l'état de déplacement en cours, le module d'obtention (440) comprend :
une unité d'acquisition configurée pour acquérir en temps réel un emplacement de déplacement à une étape de déplacement correspondant à l'état de déplacement en cours ;
une première unité d'obtention configurée pour obtenir l'information de recommandation d'étape de déplacement correspondant à l'état de déplacement en cours selon la deuxième information associée cible, en réponse à une détermination selon laquelle une distance entre l'emplacement de déplacement et un emplacement de la destination de déplacement est supérieure à un seuil prédéterminé ; et
une deuxième unité d'obtention configurée pour obtenir l'information de recommandation d'étape de déplacement correspondant à l'état de déplacement en cours selon la première information associée cible et la deuxième information associée cible, en réponse à une détermination que la distance entre l'emplacement de déplacement et l'emplacement de la destination de déplacement est inférieure ou égale au seuil prédéterminé.

5. Appareil (400) selon la revendication 4, comprenant en outre :
un troisième module de détermination configuré pour déterminer que l'état de déplacement actuel est un état de pré-déplacement, en réponse à la réception d'une demande d'interrogation d'itinéraire pour la destination de déplacement.

6. Appareil (400) selon la revendication 4, dans lequel le deuxième module de détermination (420) comprend :
une unité de détermination configurée pour déterminer un itinéraire de déplacement pour aller vers la destination de déplacement selon le mode de déplacement ; et
une unité de définition configurée pour déterminer qu'une information associée à l'itinéraire de déplacement est la deuxième information associée.

7. Support de stockage non transitoire lisible par ordinateur sur lequel des instructions d'ordinateur sont stockées, dans lequel les instructions d'ordinateur sont configurées pour amener un ordinateur à mettre en oeuvre le procédé selon l'une quelconque des revendications 1 à 3.

8. Produit-programme d'ordinateur contenant un programme d'ordinateur, dans lequel le programme d'ordinateur, lorsqu'il est exécuté par un processeur, amène le processeur à mettre en oeuvre le procédé selon l'une quelconque des revendications 1 à 3.
